Europäisches Patentamt

European Patent Office

Office européen des brevets

(11) Numéro de publication: **0 005 676**
A2

## (12) DEMANDE DE BREVET EUROPEEN

(21) Numéro de dépôt: **79400323.6**

(22) Date de dépôt: **22.05.79**

(51) Int. Cl.²: **B 22 D 11/12**
**B 22 D 27/02**

(30) Priorité: **23.05.78 FR 7815304**

(43) Date de publication de la demande:
**28.11.79 Bulletin 79/24**

(84) Etats Contractants Désignés:
**AT BE CH DE GB IT LU SE**

(71) Demandeur: **C E M COMPAGNIE ELECTRO MECANIQUE Société Anonyme**
**12, rue Portalis**
**F-7500-8 Paris(FR)**

(72) Inventeur: **Kant, Michel**
**5 Allée Guillaume des Flavy**
**F-60150 Thourotte(FR)**

(72) Inventeur: **Burnier, Pierre**
**4, rue de Condé**
**F-93150 Longjumeau(FR)**

(74) Mandataire: **Roger-Petit, Jean-Camille et al,**
**OFFICE BLETRY 2, Boulevard de Strasbourg**
**F-75010 Paris(FR)**

(54) Procédé de brassage électromagnétique de billettes ou blooms coulés en continu.

(57) Le procédé permettant de brasser par voie électromagnétique le métal liquide d'une billette ou d'un bloom en cours de coulée continue, consistant à appliquer un champ électromagnétique mobile à une zone du puits liquide formé par la billette ou le bloom en cours de coulée.

Il consiste à appliquer à ladite zone un champ électrogmagnétique se déplaçant de manière hélicoîdale autour de ladite zone de façon à produire un mouvement hélicoîdal du métal liquide dans la partie périphérique du puits liquide.

L'invention permet d'améliorer grandement la qualité métallurgique des billettes ou des blooms obtenus par coulée continue.

Fig.1

EP 0 005 676 A2

Croydon Printing Company Ltd.

Procédé de brassage électromagnétique de billettes ou blooms coulés en
continu.

La présente invention concerne un procédé permettant de brasser par
voie électromagnétique le métal liquide d'une billette ou bloom en cours
de coulée continue,consistant à appliquer un champ électromagnétique mobile à une zone du puits liquide formé par la billette ou bloom en cours
de coulée.

Il est connu que, grâce à un mouvement de rotation ou de translation
du métal liquide par rapport au front de solidificatification, on peut
obtenir une amélioration de la qualité métallurgique du produit coulé en
continu et en particulier la réduction des défauts internes concernant la
structure de solidification, la présence de porosités ou retassures, la
concentration en paquets d'inclusions et la ségrégation d'éléments d'alliage dans une section droite ou le long de l'axe de la billette ou du bloom.

Il est connu que l'on peut provoquer, au sein d'une lingotière et/ou
de la zone de redroidissement secondaire, des mouvements de rotation du
métal liquide par application d'un champ électromagnétique tournant cu des
mouvements de translation par application de champs électromagnétiques glissants.

Cependant, l'effet de ces deux types de champs n'est pas le même
du point de vue du mode d'action, sinon du point de vue des résultats métallurgiques.

En effet, les mouvements de rotation produits par un champ électromagnétique tournant déplacent la matière dans des plans perpendiculaires à
l'axe du produit coulé et généralement à une vitesse relativement grande,
car il est plus facile d'organiser ce type de mouvement qu'un mouvement
linéaire.

Ce mouvement rotatif rapide a un double effet ; rupture des têtes
de dendrites du front de solidification et amélioration des échanges thermiques de surface au front de solidification.

1. La rupture des têtes de dendrites elle-même conduit à plusieurs résultats :

1.1. Tout d'abord, la suppression des ponts de métal solide qui isolent au sein du produit coulé des volumes liquides qui se solidifient comme des mini-lingots avec apparition de retassures au centre des mini-lingots, concentration des inclusions en tête et pied du mini-lingot, ségrégation axiale et radiale des éléments d'alliage.

1.2. Les têtes de dendrites arrachées au front de solidification constituent des germes favorables à la cristallisation équiaxe qui conduit à une réduction des phénomènes de ségrégation.

1.3. Lorsque les têtes de dendrites sont entraînées dans des zones où le métal liquide a une température nettement supérieure au liquidus, les têtes de dendrites fondent en absorbant la chaleur nécessaire à leur fusion, donc en abaissant la "surchauffe" du métal liquide.

2. L'amélioration des échanges thermiques de surface au front de solidification résulte du mouvement du métal liquide par rapport à la surface solide d'où sont retirées les calories, et contribue également à une réduction de la surchauffe du métal liquide donc à une croissance dendritique plus régulière et à une réduction de tous les défauts de solidification.

Cependant, cette augmentation des échanges thermiques ne se produit pratiquement qu'au niveau de l'inducteur. En effet, les mouvements de rotation s'amortissent rapidement sous forme de cône au-dessus et au-dessous de l'inducteur. Or, il est évident que le métal le plus surchauffé se trouve tout en haut du puits de solidification et que le mouvement de rotation dans des plans perpendiculaires à l'axe de la billette ou du bloom contribue faiblement à une homogénéisation de la température du métal liquide du haut au bas du puits liquide.

Par ailleurs, et pour la même raison, il se produit peu d'homogénéisation dans la composition du métal liquide en élément d'alliage qui serait favorable à une ségrégation réduite.

Dans le cas du brassage électromagnétique linéaire, des champs glissants parallèlement à l'axe du produit coulé entraînent le métal dans des boucles de circulation dirigées de bas en haut et de haut en bas. L'organisation de cette circulation dans un puits de faible diamètre et de grande longueur est relativement difficile à obtenir et, par ailleurs, les divers effets parasites caractéristiques du moteur linéaire à induction rendent plus difficile l'obtention de mouvements rapides du métal liquide à l'aide d'un inducteur de volume donné.

Néanmoins, le brassage linéaire conduit à un échange de masse et de chaleur efficace entre les différents niveaux du puits liquide, ce qui permet à la fois une réduction de la surchauffe et une homogénéisation de la composition du métal liquide, donc une certaine amélioration de la qualité métallurgique des produits coulés. En outre, il permet une homogénéisation des gradients de température sur tout le front de solidification et, par suite, une croissance plus régulière des dendrites qui ont moins tendance à former des ponts. Il semble qu'il soit plus difficile, cependant, d'obtenir une zone "équiaxe" faute d'un ensemencement suffisant par les têtes de dendrites arrachées au front de solidification, et de faire disparaître les mini-lingots qui sont à l'origine des défauts les plus importants constatés dans la métallurgie des produits coulés en continu.

En outre, du fait du grand entrefer existant nécessairement entre l'inducteur et le puits liquide dont le diamètre est comparativement très faible, le pas polaire doit être grand, ainsi que, par conséquent, la longueur totale de l'inducteur qui, pour avoir une bonne efficacité, doit comporter un assez grand nombre de pôles. C'est ainsi que, dans le cas du brassage électromagnétique linéaire, l'inducteur a une longueur d'au moins un ou plusieurs mètres par exemple, alors qu'un inducteur rotatif n'est long que de quelques décimètres. Ceci représente un inconvénient important pour le sidérurgiste car non seulement la structure de la ligne de coulée continue doit supporter un inducteur de poids important, mais encore il est difficile d'organiser autour du produit coulé les dispositifs habituels de soutien (rouleaux de guidage) et de refroidissement (busette de projection d'eau de refroidissement secondaire).

De toute façon un brassage linéaire en lingotière ne paraît avoir que des effets très limités du fait de la faible longueur de la lingotière et du fait de sa conductibilité électrique réduite.

La présente invention a pour but de fournir un procédé de brassage permettant d'obtenir au sein du puits liquide des mouvements différents de ceux connus et conduisant à une plus grande amélioration de la qualité métallurgique du produit coulé en continu que les procédés de brassage antérieurement connus, même réunis.

A cet effet, le procédé de brassage selon la présente invention est caractérisé en ce qu'il consiste à appliquer à ladite zone du puits liquide un champ électromagnétique se déplaçant de manière hélicoïdale de façon à produire un mouvement hélicoïdal du métal liquide dans la partie périphérique du puits liquide.

Le champ à mouvement hélicoïdal peut être obtenu soit directement, soit indirectement par exemple à partir de bobines convenablement disposées spatialement et convenablement raccordées à une ou plusieurs sources de courant polyphasé. Suivant un mode de réalisation de la présente invention, le champ à mouvement hélicoïdal peut être engendré en superposant des champs respectivement tournant et glissant qui sont produits au moyen d'un inducteur unique ayant, sur un même circuit magnétique, des enroulements produisant un champ tournant et des enroulements produisant un champ glissant.

On notera que, lorsqu'on utilise deux champs superposés, respectivement tournant et glissant, pour produire le champ à mouvement hélicoïdal, les deux champs superposés doivent être appliqués simultanément à la même zone du puits liquide. Il est en effet nécessaire que le mouvement hélicoïdal soit engendré dans une même zone du puits liquide. En effet, si l'on essaie de produire ce mouvement à l'aide de deux inducteurs séparés, disposés l'un en dessous de l'autre et produisant l'un un mouvement de translation et l'autre un mouvement de rotation, on constate que ces deux mouvements bien loin de s'additionner, ne s'interpénètrent pas et se contrarient au voisinage d'une zone intermédiaire entre les deux inducteurs.

Au contraire lorsque le champ à mouvement hélicoïdal est produit en excitant deux enroulements sur un même circuit magnétique, la circulation du métal liquide s'organise de la façon suivante : le métal liquide à la périphérie du puits liquide, donc au voisinage du front de solidification, tourne hélicoïdalement au niveau de l'inducteur et sur une grande distance au-dessus et au-dessous de l'inducteur, et le circuit de métal liquide se referme par une circulation en sens inverse au voisinage de l'axe du produit coulé. Il n'est pas nécessaire pour cela que l'enroulement produisant le champ glissant soit très puissant et, de ce fait, on peut se contenter d'un inducteur de longueur limitée et de poids beaucoup plus réduit que celui qu'il faut considérer ci-dessus pour un brassage linéaire seul.

L'effet de ce mouvement hélicoïdal à composante rotative rapide et à composante linéaire lente est extrêmement efficace sous tous les aspects et beaucoup plus important que celui de deux inducteurs séparés si on pouvait les combiner.

En effet, la rapidité du mouvement provoque un très bon ensemencement de la phase liquide en germes provenant des têtes de dendrites arrachées à la surface de solidification. Les échanges thermiques de surface au front de solidification sont importants, non seulement parce que la vitesse du liquide est grande, mais encore parce que la surface concernée s'étend très loin au-dessus et au-dessous de l'inducteur.

D'autre part, les échanges de masse et de chaleur entre le haut et le bas du puits liquide sont plus importants que dans le cas d'un mouvement linéaire, même si celui-ci a une plus grande vitesse que la seule composante linéaire du mouvement hélicoïdal considéré, car l'organisation de la circulation du métal liquide se fait plus aisément et avec moins de bouclage parasite entre le flux montant et le flux descendant. Ceci est probablement dû à une meilleure stratification des vitesses de couches co-axiales de liquide sous l'effet des forces liées à la composante de mouvement de rotation.

La présente invention sera maintenant décrite en faisant référence aux dessins annexés sur lesquels :

La figure 1 est une vue en coupe axiale et verticale d'une billette ou d'un bloom en cours de coulée continue, et elle montre la circulation de métal liquide à l'intérieur du puits liquide lorsque celui-ci est brassé par le procédé selon l'invention.

Les figures 2a et 2b montrent respectivement en coupe longitudinale et en coupe transversale une première forme d'exécution possible d'un inducteur permettant d'engendrer un champ électromagnétique à mouvement hélicoïdal.

Les figures 3a et 3b montrent respectivement en coupe longitudinale et en coupe transversale une deuxième forme d'exécution d'un inducteur permettant d'engendrer un champ électromagnétique à mouvement hélicoïdal.

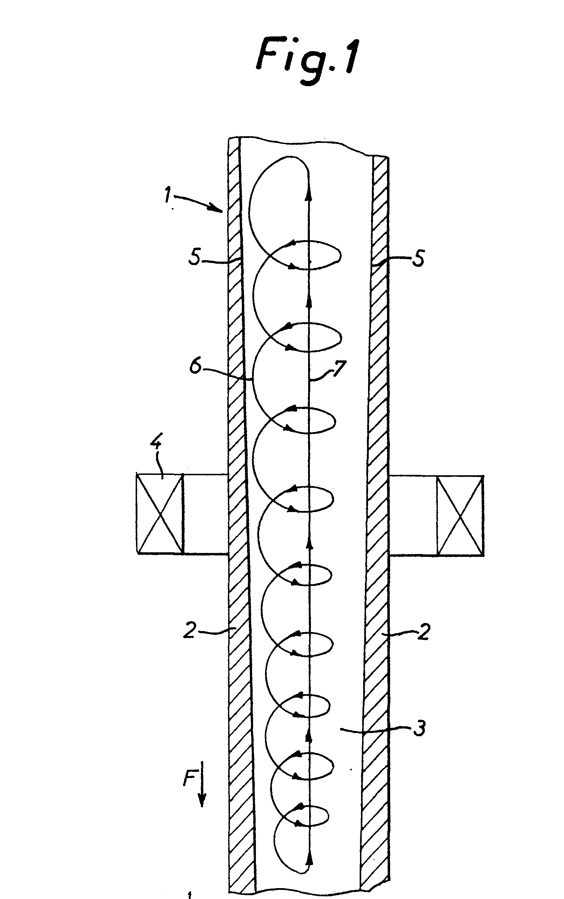

Sur la figure 1, le numéro 1 désigne une billette ou un bloom en cours de coulée continue à partir d'une lingotière non montrée ; 2 désigne la croûte de métal solidifié, qui forme le puits de solidification et dont l'épaisseur augmente dans le sens F de la coulée ; 3 désigne le métal liquide qui forme le puits liquide et qui est soumis à un brassage au moyen d'un champ électromagnétique engendré par un inducteur 4.

L'inducteur 4 est conçu pour engendrer un champ à mouvement hélicoïdal, de telle sorte qu'il s'établisse une circulation de métal liquide comme montré sur la figure 1. Plus spécialement, à la périphérie du puits liquide 3, c'est-à-dire au voisinage du front de solidification 5, le métal liquide suit un trajet hélicoïdal descendant 6, qui prend naissance à une distance relativement grande au-dessus de l'inducteur 4 et qui se termine à une distance relativement grande au-dessous dudit inducteur, tandis que, au centre, le métal liquide suit un trajet de retour ascendant et sensiblement axial 7. Bien que le sens de circulation décrit ci-dessus soit préféré, on notera que l'on peut aussi avoir un trajet hélicoïdal 6 ascendant et un trajet de retour 7 descendant.

On peut imaginer différents dispositifs pour engendrer le champ électromagnétique à mouvement hélicoïdal produisant le mouvement de liquide concerné par la présente invention.

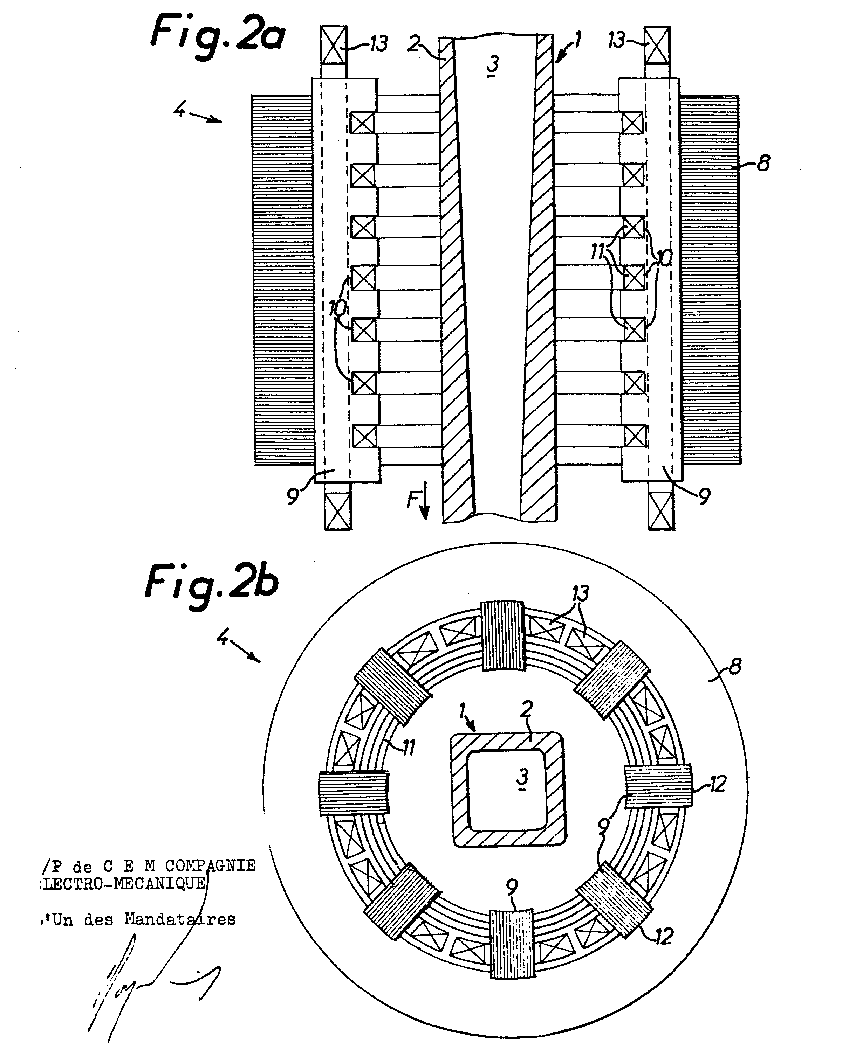

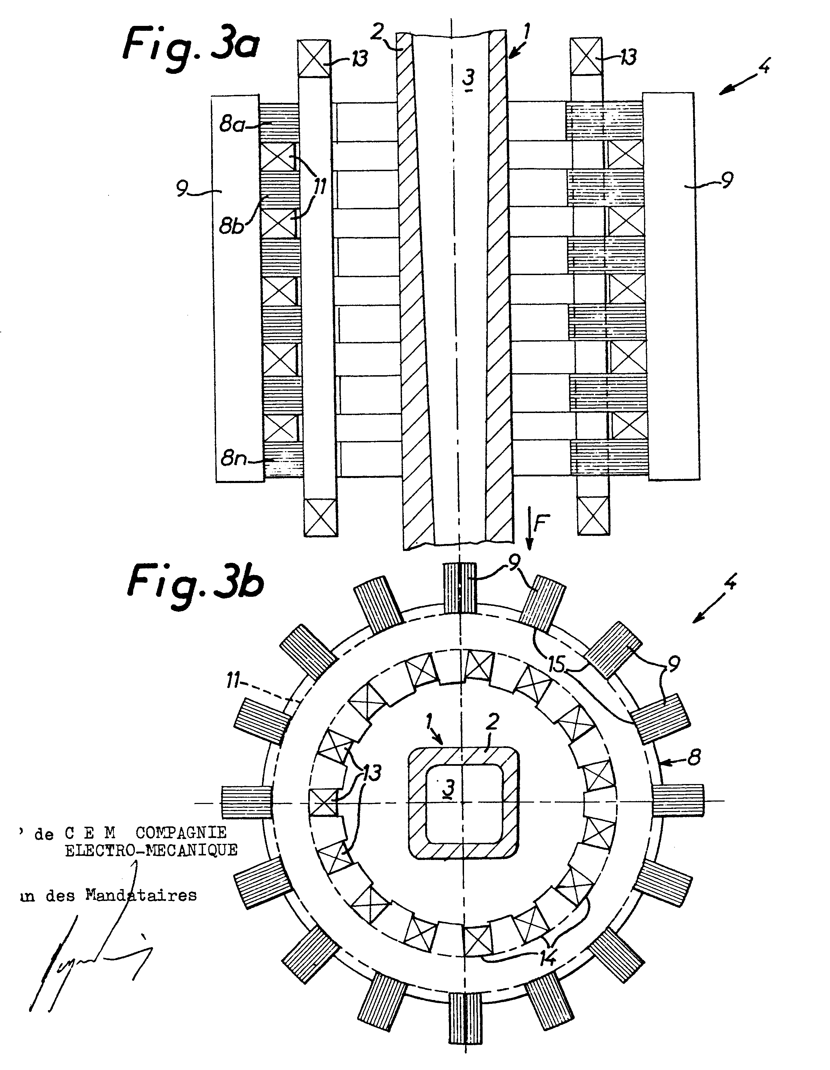

A titre non limitatif, les figures 2a, 2b et 3a, 3b montrent schématiquement deux dispositions susceptibles d'une réalisation technologique simple et efficace.Les figures 2a et 2b montrent une disposition dans laquelle l'enroulement produisant le champ glissant est situé à l'intérieur de l'enroulement produisant le champ tournant. Les figures 3a et 3b montrent une disposition dans laquelle l'enroulement produisant le champ glissant est situé à l'extérieur de l'enroulement produisant le champ tournant.

Dans les figures 2a et 2b, le circuit magnétique est composé d'une carcasse cylindrique 8 formée de tôles annulaires minces empilées, portant dans son alésage des barreaux 9 de tôles empilées de section rectangulaire et d'axe parallèle aux génératrices de la carcasse cylindrique 8. Ces barreaux 9 comportent des encoches 10 dans lesquelles sont disposées les bobines 11 de l'enroulement produisant le champ glissant, par exemple sous la forme de bobines circulaires. Les barreaux 9 sont maintenus en position circonférentiellement dans des rainures 12 formées dans l'alésage de la carcasse cylindrique 8 et radialement par un système de calage non montré. Entre les barreaux 9 sont disposées les bobines 13 de l'enroulement produisant le champ tournant.

Les bobinages à champ glissant et à champ tournant sont polyphasés et alimentés à fréquence industrielle (50 ou 60 $H_z$) ou à fréquence réduite. Une condition favorable est l'alimentation à fréquence industrielle du bobinage 13 à champ tournant et à fréquence réduite du bobinage 11 à champ glissant. L'ensemble de l'inducteur 4 est placé dans un boîtier toroïdal (non montré) préférablement parcouru par un courant d'eau de refroidissement.

Les figures 3a et 3b représentent une autre disposition des enroulements de champ tournant et de champ glissant. Le circuit magnétique est constitué d'une série de couronnes axialement espacées 8a, 8b, ... 8n, formées chacune d'un paquet de tôles annulaires empilées. Chaque couronne présente des encoches intérieures 14 et des encoches extérieures 15 moins profondes que les encoches 14. Les encoches 14 des couronnes successives 8a, 8b,...8n, sont alignées et reçoivent les bobines 13 de l'enroulement à champ tournant. Entre les couronnes successives 8a, 8b, ... 8n sont disposées les bobines 11 de l'enroulement à champ glissant. Dans les encoches extérieures 15 sont disposés les barreaux 9, formés de tôles empilées, qui assurent la fermeture du flux pour le champ glissant.

On a constaté que le meilleur compromis entre l'efficacité de brassage et la compacité de l'inducteur était obtenu pour une induction corres-

0005676

pondant au champ glissant inférieure à la moitié de l'induction correspondant au champ tournant. Par exemple, pour des billettes de section carrée de 150mm de côté, un champ tournant de l'ordre de 0,02 Tesla est superposé à un champ glissant de l'ordre de 0,01 Tesla environ.

La disposition la plus économique consiste à alimenter en parallèle les enroulements à champ glissant et les enroulements à champ tournant à partir d'une même source à fréquence industrielle. Toutefois, dans certains cas, on obtient encore une amélioration des résultats métallurgiques en alimentant l'enroulement à champ glissant à partir d'une source séparée, de fréquence de 10 à 20 Hz, l'enroulement à champ tournant étant alimenté à fréquence industrielle (50 ou 60 $H_z$).

On a constaté que dans ces conditions on obtient une structure métallurgique du produit coulé de haute qualité avec une large zone équiaxe au centre, et une disparition complète de tout signe indiquant la formation de mini-lingots. Les grosses retassures axiales sont remplacées par une ligne fine et régulière de petites porosités dans l'axe, et il n'y a plus aucun amas d'inclusions. La ségrégation en éléments d'alliage, en particulier dans le cas des aciers au Carbone, est très réduite. L'écart de teneur en éléments d'alliage, par exemple Carbone, entre la région externe et le coeur du produit coulé, est très faible.

SEPT PAGES.-                    P/P de CEM COMPAGNIE ELECTRO-MECANIQUE


L'un des Mandataires

REVENDICATIONS DE BREVET
-----------------------------

1. Procédé permettant de brasser par voie électromagnétique le métal liquide d'une billette ou d'un bloom en cours de coulée continue, consistant à appliquer un champ électromagnétique mobile à une zone du puits liquide formé par la billette ou le bloom en cours de coulée, caractérisé en ce qu'il consiste à appliquer à ladite zone un champ électromagnétique se déplaçant de manière hélicoïdale autour de ladite zone de façon à produire un mouvement hélicoïdal du métal liquide dans la partie périphérique du puits liquide.

2. Procédé de brassage selon la revendication 1, caractérisé en ce qu'il consiste à appliquer à ladite zone simultanément un champ électromagnétique tournant connu en soi et un champ électromagnétique glissant connu en soi.

3. Procédé de brassage selon la revendication 2, caractérisé en ce que l'induction correspondant au champ glissant est inférieure ou égale à la moitié de l'induction correspondant au champ tournant.

4. Procédé de brassage selon la revendication 2 ou 3, caractérisé en ce que le champ glissant est produit par des enroulements alimentés en courant polyphasé à une fréquence plus faible que la fréquence du courant polyphasé d'alimentation des enroulements produisant le champ tournant.

5. Procédé de brassage selon la revendication 4, caractérisé en ce que les enroulements produisant le champ tournant sont alimentés à fréquence industrielle, tandis que les enroulements produisant le champ glissant sont alimentés à une fréquence comprise entre 10 et 20 Hz.

UNE PAGE.-

P/P de C E M COMPAGNIE ELECTRO-MECANIQUE


L'un des Mandataires

# Fig.1

0005676

2/3

# Fig.2a

# Fig.2b

P de C E M COMPAGNIE
LECTRO-MECANIQUE

Un des Mandataires

*Fig. 3a*

13    2    1    13    4

8a
9    11
8b

3

8n

F

*Fig. 3b*

9    4

11    15    9

1    2

13    8

3

14

' de C E M COMPAGNIE
ELECTRO-MECANIQUE

un des Mandataires